# EUROPÄISCHE PATENTSCHRIFT

(11) **EP 3 267 858 B1**
(45) Veröffentlichungstag und Bekanntmachung des Hinweises auf die Patenterteilung: **06.03.2024**
(21) Anmeldenummer: 16708157.9
(22) Anmeldetag: 07.03.2016
(51) Int. Cl.: A47J 31/44

(54) **MILCHAUFSCHÄUMVORRICHTUNG, DIESE ENTHALTENDER GETRÄNKEBEREITER UND VERFAHREN ZUR AUFSCHÄUMUNG VON MILCH**
MILK FROTHING DEVICE, BEVERAGE MAKER CONTAINING SAME, AND METHOD FOR FROTHING MILK
DISPOSITIF DE MOUSSAGE DE LAIT, APPAREIL DE PRÉPARATION DE BOISSON DOTÉ DE CE DISPOSITIF ET PROCÉDÉ DE MOUSSAGE DE LAIT

(30) Priorität: 10.03.2015 DE 102015204278
(43) Veröffentlichungstag der Anmeldung: 17.01.2018
(73) Patentinhaber: WMF GmbH, 73312 Geislingen/Steige (DE)
(72) Erfinder: ARNDT, Peter, 89134 Blaustein (DE); DOLLNER, Sander, 89233 Neu-Ulm (DE); GUSSMANN, Jochen, 73527 Schwäbisch Gmünd (DE); STARTZ, Armin, 89197 Weidenstetten (DE); KUCHLER, Thobias, 89077 Ulm (DE)
(74) Vertreter: Pfenning, Meinig & Partner mbB
(86) Internationale Anmeldenummer: PCT/EP2016/054736
(87) Internationale Veröffentlichungsnummer: WO 2016/142318

(56) Entgegenhaltungen:
- EP-A1- 2 570 060
- WO-A1-2014/096183
- WO-A1-2015/082391
- DE-C1- 3 918 268

## Beschreibung

Die vorliegende Erfindung betrifft eine Milchaufschäumvorrichtung mit einer Mischkammer, die so aufgebaut ist, dass bei Durchströmen der Milch durch die Mischkammer Scherkräfte auf die Milch einwirken, die zur mechanischen Lyse der in der Milch enthaltenen Proteine führen und damit eine verbesserte Aufschäumung der Milch bewirken. Die Erfindung betrifft ebenso einen Getränkebereiter mit dieser Milchaufschäumvorrichtung und ein Verfahren zur Aufschäumung von Milch unter Einsatz dieser Milchaufschäumvorrichtung.

Moderne Kaffeemaschinen, die auch Milch oder Milchschaum oder auch Mischgetränke ausgeben, können auch kalte Milch oder kalten Milchschaum ausgeben. Um Milch bzw. Milchschaum alternativ kalt oder erwärmt auszugeben, werden aufwendige Systeme eingesetzt: Beispielsweise gibt es Vorrichtungen zur Umgehung des Erhitzers (EP 2 120 656 B1) oder komplett getrennte (doppelte) Pfade zum Erzeugen und zum Ausgeben kalter oder warmer Produkte (EP 2 294 952 B1).

Nachteilig ist dabei der hohe systemseitige Aufwand. Dieser resultiert auch daher, dass zum Schäumen warmer Milch aufgrund der deutlich unterschiedlichen Viskosität ein wesentlich höherer Energieeintrag zum Erzeugen der gleichen feinporigen und homogenen Schaumqualität erforderlich ist als bei kalter Milch. Ein großer Nachteil der bekannten Systeme ist insbesondere die geringe Flexibilität, da oft hohe Arbeitsdrücke (durch sehr kleine Blenden in den Rohrleitungen erforderlich sind). Dies führt dazu, dass Komponenten wie Pumpen, Durchlauferhitzer usw. nur in einem sehr schmalen Bereich genutzt werden können und sich gegenseitig beeinflussen. Das Ergebnis ist somit entsprechend in der Variabilität begrenzt.

Aus der WO-A-2015/082391 sind auch Milchaufschäumvorrichtungen bekannt, die diese Probleme zwar nicht aufweisen, aber sich aufgrund ihres vergleichsweise großen Gehäusedurchmessers nicht für alle Anwendungen eignen.

Auch Vorrichtungen die zur Produktion von Speiseeis verwendet werden, zeigen keine energetische Optimierung. In der DE-C-39 18 268 wird beispielsweise eine Aufschlagvorrichtung gezeigt, die nur bei einer sehr hohen Förderleistung des angeschlossenen Pumpensystems Scherkräfte erzeugen kann, die groß genug sind, um Milch aufzuschäumen.

Ausgehend von diesem Stand der Technik ist es Aufgabe der vorliegenden Erfindung, eine Milchaufschäumvorrichtung bereitzustellen, die eine größtmögliche Flexibilität hinsichtlich der Schaumkonsistenzen ermöglicht. Gleichzeitig soll das System einen einfachen, aber gleichzeitig wenig störanfälligen Aufbau haben, so dass die Schaumerzeugung möglichst unabhängig von Schwankungen von Parametern, wie der Luftmenge, Luftdruck, Milchmenge, Milchdruck oder Temperaturen ist.

Diese Aufgabe wird durch die Milchaufschäumvorrichtung gemäß Anspruch 1 sowie dem Getränkebereiter mit den Merkmalen des Anspruchs 8 sowie das Verfahren zur Aufschäumung von Milch mit den Merkmalen des Anspruchs 9 gelöst. Die weiteren abhängigen Ansprüche zeigen vorteilhafte Weiterbildungen auf.

Erfindungsgemäß wird eine Milchaufschäumvorrichtung mit einer Mischkammer bereitgestellt, wobei die Mischkammer mindestens einen Einlass für Milch und Luft und/oder Dampf sowie mindestens einem Auslass für den Milchschaum aufweist. In der Mischkammer ist weiterhin eine radial oder axial bewegbare Welle angeordnet und die Mischkammer weist zwischen Einlass und Auslass mehrere alternierend angeordnete Scherelemente auf, die eine mäanderförmige Strömung der Milch von Einlass zu Auslass ermöglichen. Die auf der mindestens einen Welle angeordneten Scherelemente sind derart zur Kammerwand beabstandet, dass dabei wandseitige Öffnungen ausgebildet werden, die im Vergleich zum übrigen Strömungsbereich so dimensioniert sind, dass die Öffnungen einen Strömungswiderstand für die Milch darstellen. Zudem weist die Mischkammer im Strömungsbereich der Milch Verengungen auf, die einen Strömungswiderstand für die durchströmende Milch darstellen, so dass bei durchströmender Milch durch die Verengung Scherkräfte auf die Milch einwirken, die zur mechanischen Lyse der in der Milch enthaltenen Proteine führen.

Der Mischkammer kann sowohl Luft alleine, als auch mit Dampf versetzte Luft in Form eines Luft-Dampf-Gemischs zugeführt werden. Die Zufuhr von Luft alleine wird in den Fällen gewählt, in denen ein kalter Milchschaum hergestellt werden soll. Soll hingegen ein warmer Milchschaum erzeugt werden, so wird ein Luft-Dampf-Gemisch zugesetzt. Grundsätzlich ist es auch möglich, dass sowohl die Milch und die Luft oder das Luft-Dampf-Gemisch über einen einzigen Einlass der Mischkammer zugeführt wird.

Erfindungsgemäß weist die Mischkammer nun Scherelemente auf, durch die eine mehrfache Scherwirkung auf die durch die Mischkammer strömende Milch übertragen wird. Dies wird durch Verengungen im Strömungsbereich bewirkt, durch die ein Strömungswiderstand entsteht, der zu einer Druckerhöhung vor der Verengung und einer plötzlichen Entspannung der Milch unmittelbar hinter der Verengung führt. Durch diese plötzliche Entspannung treten so starke Scherkräfte auf, dass es zu einer mechanischen Zelllyse der in der Milch enthaltenen Proteine kommt. Durch diese Zelllyse wird bewirkt, dass die Milch besser aufschäumbar ist.

Die Mischkammer kann sowohl einen zylindrischen oder konischen Aufbau aufweisen. Im Falle eines konischen Aufbaus ist es bevorzugt, dass der Durchmesser der Mischkammer vom Einlass zum Auslass abnimmt. Durch die Verringerung des Durchmessers kann der Energieeintrag gegen Ende verringert werden, was zu einer Beruhigung des Schaums führt, wodurch sich die Homogenisierung des Milchschaums verbessern lässt.

Eine erfindungsgemässe Ausführungsform der Milchaufschäumvorrichtung sieht vor, dass der mindestens eine Einlass für Milch und Luft oder Luft-Dampf-Gemisch im Zentrum der Mischkammer im Bereich der Welle angeordnet ist. In diesem Fall sind die Scherelemente derart angeordnet, dass die durch den Einlass eintretende Milch bzw. die Gemische aus Milch und Luft oder Luft-Dampf-Gemisch alternierend vom Kammerzentrum zur Kammerwand und im Anschluss von der Kammerwand zum Kammerzentrum befördert wird. Dieser mäanderförmige Strömungsweg kann sich mehrfach wiederholen, wobei die Zahl der Mäander lediglich durch die Dimensionierung der Mischkammer limitiert ist.

Eine weitere erfindungsgemäße Ausführungsform sieht vor, dass der mindestens eine Einlass für Milch, Luft oder Luft-Dampf-Gemisch im Bereich der Kammerwand angeordnet ist. Für diesen Fall sind die Scherelemente so angeordnet, dass die Milch, Luft bzw. Luft-Dampf-Gemisch alternierend von der Kammerwand zum Kammerzentrum und anschließend vom Kammerzentrum zur Kammerwand gefördert wird. Auch hier ergibt sich dann eine mäanderförmige Strömung.

Erfindungsgemäss sind auf der mindestens einen Welle Scherelemente angeordnet, die zur Kammerwand beabstandet sind, wodurch es zur Ausbildung von wandseitigen Öffnungen kommt, die im Vergleich zum übrigen Strömungsbereich, d.h. den Strömungsbereichen zwischen benachbarten Scherelementen, so dimensioniert sind, dass diese wandseitigen Öffnungen Verengungen darstellen. Zusätzlich sind auch Scherelemente an der Kammerwand angeordnet, wodurch es zur Ausbildung von wellenseitigen Öffnungen kommt, die im Vergleich zum übrigen Strömungsbereich, d.h. den Strömungsbereichen zwischen benachbarten Scherelementen, so dimensioniert sind, dass diese wandseitigen Öffnungen Verengungen darstellen. Der durch die Verengungen entstehende Strömungswiderstand bewirkt vor der Verengung eine Druckerhöhung und unmittelbar nach der Verengung eine plötzliche Entspannung, wodurch besonders starke Scherkräfte auf die Milch wirken.

Ein bevorzugter Aufbau der Mischkammer sieht vor, dass die Scherelemente in der Mischkammer abwechselnd an der Mischkammerwand und die jeweils in Einlass- und Auslassrichtung benachbarten Scherelemente an der Welle angeordnet sind. Dies führt zu einer mäanderförmigen Strömung der Milch. Die in der Mischkammer angeordnete Welle lässt sich mit einer bevorzugten Variante mittels eines Rotorantriebs rotieren. Die Drehzahl des Rotors liegt dabei vorzugsweise zwischen 500 1/min und 7000 1/min, besonders bevorzugt zwischen 2000 1/min und 4000 1/min.

Ebenso ist es möglich, dass in der Mischkammer mehrere rotierbare Wellen, z. B. zwei Wellen, angeordnet sind, die zueinander gegenläufig rotierbar sind. In diesem Fall wirken durch die Rotation zusätzliche Scherkräfte auf die Milch ein.

Eine weitere bevorzugte Ausführungsform sieht vor, dass die Welle axial in Richtung der Einlässe und in Richtung der Auslässe mittels eines Axialantriebs bewegbar ist. Bevorzugt zählen hierzu Schwingankerantriebe, wie sie z.B. in einer Schwingankerpumpe eingesetzt werden. Dabei wird die Welle an einem Ende mit einem Eisenkern oder Permanentmagneten (Anker) und einer Feder versehen. Zusätzlich wird eine Spule eingesetzt, die mit Wechselspannung beaufschlagt wird und ein oszillierendes Magnetfeld erzeugt. Im Falle von zwei getrennten Spulen kann auf eine Feder verzichtet werden. Der Schwingankerantrieb kann sowohl in der Mischkammer integriert sein, so dass Feder und Anker von Milch umspült werden. Ebenso ist es möglich, dass der Schwingankerantrieb außerhalb der Mischkammer angeordnet ist.

Die erfindungsgemäßen Scherelemente sind ausgewählt aus der Gruppe bestehend aus Scheiben, Lamellen sowie Kombination hiervon. Dabei können die Scheiben zusätzlich Durchbrechungen aufweisen, insbesondere in Form von Löchern, Schlitzen oder Kombinationen hiervon. Diese Durchbrechungen sind im Verhältnis zum übrigen Strömungsbereich, d. h. dem Bereich zwischen benachbarten Scheiben, so dimensioniert, dass die Durchbrechungen Verengungen darstellen. Diese bilden dann einen Strömungswiderstand für durchströmende Milch. Beim Durchtritt durch die Durchbrechungen kommt es dann ebenfalls zu einer plötzlichen Entspannung hinter der Durchbrechung, was mit erhöhten Scherkräften auf die durchströmende Milch verbunden ist. Hierbei sind die Durchbrechungen benachbarter Scheiben vorzugsweise zueinander versetzt angeordnet, so dass durch die Durchbrechung durchströmende Milch umgelenkt werden muss, um durch die Durchbrechung in der nächsten Scheibe zu strömen.

Eine weitere bevorzugte Ausführungsform sieht vor, dass die Milchaufschäumvorrichtung mit einer Steuereinheit verbunden ist, mit der mindestens eine der folgenden Kenngrößen der Milchaufschäumvorrichtung einstellbar ist/sind:
- die der Mischkammer zugeleitete Milchmenge,
- die der Mischkammer pro Zeiteinheit zugeleitete Luftmenge oder Luft-Dampf-Gemisch-Menge,
- das Mischungsverhältnis von Luft und Dampf eines der dynamischen Mischeinheit zugeleiteten Luft-Dampf-Gemisches,
- die Fördergeschwindigkeit für Milch, Luft und/oder Dampf
- die mechanische Energiezufuhr für die Welle, insbesondere Drehzahl Hub und/oder Hubfrequenz.

Vorzugsweise lässt sich die Milch- und/oder Milchschaumtemperatur über die Menge des Dampfes und/oder die Temperatur des Dampfes steuern oder regeln, wobei der Energieeintrag im Wesentlichen auf die Kondensation des Dampfes zurückzuführen ist. Alternativ oder zusätzlich ist es auch möglich, eine Heizung der Mischkammer_und/oder einen Durchlauferhitzer zum Erhitzen der Milch und/oder des Milchschaums vorzusehen. Auch dies kann durch die Steuereinheit gesteuert bzw. durch die Steuer- und Regeleinheit geregelt werden.

Erfindungsgemäß wird ebenso ein Getränkebereiter bereitgestellt, der eine Milchaufschäumvorrichtung, wie sie zuvor beschrieben wurde, aufweist. Zu den erfindungsgemäßen Getränkebereiter zählen insbesondere solche zum Zubereiten von Heißgetränken.

Erfindungsgemäß wird ebenso ein Verfahren zur Aufschäumung von Milch in einer Mischkammer bereitgestellt, bei dem die zuvor beschriebene Milchaufschäumvorrichtung eingesetzt wird. Die Mischkammer weist mindestens einen Einlass für Milch und/oder Luft und/oder Luft-Dampf-Gemisch sowie mindestens einen Auslass für den Milchschaum auf. In der Mischkammer ist dabei eine radial oder axial bewegbare Welle angeordnet. Die Milch strömt an in der Mischkammer angeordneten Scherelementen entlang mäanderförmig durch die Mischkammer von den Einlässen zu den Auslässen. Aufgrund von mehreren Verengungen im Strömungsbereich der Milch wird ein Strömungswiderstand erzeugt, so dass bei durchströmender Milch durch die Verengungen Scherkräfte auf die Milch
einwirken, die zur mechanischen Lyse der in der Milch enthaltenen Proteine führen.

Der Mischkammer kann Dampf zugeführt werden, um das Gemisch (den Milchschaum) warm auszugeben. Zusätzlich ist auch eine Beimischung von Geschmacksstoffen (z.B. in Sirupform) in der Mischkammer möglich oder z.B. die Zumischung von Kaffee oder das Aufschäumen von Trinkschokolade oder ähnlichen Getränken.

Durch Veränderung beispielsweise der Drehzahl des Rotorantriebs, der Hubgeschwindigkeit des Axialantriebs der Luftmenge (Volumenstrom), der Milchmenge (Volumenstrom) und/oder von Dampftemperatur und/oder Dampfmenge oder einer beliebigen Kombination daraus kann die Schaumkonsistenz erfindungsgemäß über einen breiten Bereich eingestellt werden, wobei auf Einflussgrößen wie beispielsweise die Viskosität der Milch bedingt durch die Milchtemperatur flexibel reagiert werden kann.

Die Milch kann der Mischkammer beispielsweise durch eine Pumpe zugeführt werden. Die Mischkammer kann auch stromaufwärts der Pumpe angeordnet sein, so dass die Pumpe der zusätzlichen Schaumverfeinerung dient. Weiterhin kann die Mischkammer auch zur Verfeinerung des Schaums eingesetzt werden, welcher von einem klassischen Venturisystem erzeugt wird, wie es dem Fachmann bekannt ist. Es kann der Mischkammer auch erwärmte Milch von einem Venturisystem zugeführt werden (Erwärmung der Milch durch Dampf ohne Luftzufuhr im Venturisystem), wobei die bereits erwärmte Milch durch die Zufuhr ausschließlich von Luft (also ohne Dampf) in der Mischkammer aufgeschäumt werden kann. Die Milchaufschäumvorrichtung kann auch einen Durchlauferhitzer zum Erwärmen der aufgeschäumten Milch (also stromabwärts der Mischkammer) umfassen. Es ist auch möglich, einen solchen Durchlauferhitzer stromaufwärts der Mischkammer vorzusehen, um die Milch vor ihrem Aufschäumen (bzw. vor der Luftzufuhr) bereits zu erwärmen.

Gegenüber den aus dem Stand der Technik bekannten Milchaufschäumvorrichtungen hat die erfindungsgemäße Milchaufschäumvorrichtung mehrere Vorteile.

Der eingangsseitige Druck kann (verglichen mit Blendensystemen, die mehr als 2 Bar, teilweise bis 6 Bar benötigen) vergleichsweise gering sein, d.h. < 2 Bar (beispielsweise 600 bis 1200 mBar). Somit muss der erfindungsgemäße Milchaufschäumer nicht bei hohem Druck arbeiten, er erlaubt daher einen deutlich breiteren Variationsbereich hinsichtlich Schaumkonsistenz und Schaumqualität.

Da die einzelnen Parameter des Systems (z.B. Drehzahl des Rotorantriebs der Welle, Hubgeschwindigkeit des Axialantriebs, zugeführte Luftmenge, zugeführte Milchmenge, Mischgrad zwischen Luft und Dampf) sich praktisch gegenseitig nicht beeinflussen, weist die erfindungsgemäße Milchaufschäumvorrichtung eine sehr hohe Flexibilität auf. Gerade auch durch diese Flexibilität ist eine homogene Milchschaumbildung bei unterschiedlichsten Schaumqualitäten möglich.

Die erfindungsgemäße Milchaufschäumvorrichtung hat einen vergleichsweise einfachen und kompakten Aufbau mit wenigen Komponenten. Hierbei sind die auftretenden Toträume sehr klein.

Die erfindungsgemäße Milchaufschäumvorrichtung erlaubt eine einfache und effiziente Reinigung ohne Demontage, wobei die Reinigung durch Bewegung der Welle mechanisch unterstützt werden kann. Bei einer rotierenden Welle kann dies beispielsweise durch Wechsel der Rotationsrichtung realisiert werden.

Aufgrund des geringen Systemdrucks können Abdichtungen und Verschlüsse so gestaltet werden, dass Komponenten werkzeuglos getauscht werden können. Die erfindungsgemäße Milchaufschäumvorrichtung ist somit besonders wartungsfreundlich.

Die erfindungsgemäße Vorrichtung erlaubt einen großen Bereich unterschiedlicher Förderleistungen, wobei trotz unterschiedlicher Förderleistung eine gleichbleibende Schaumqualität möglich ist. insbesondere ist durch die Erfindung auch eine einfache Erhitzungsfunktion (über den eingeströmten Dampf) möglich, bei der es zur Kondensation des Dampfes im Umströmbereich des Rotoraußenumfangs kommt.

Anhand der nachfolgenden Figuren und Beispiele soll der erfindungsgemäße Gegenstand näher erläutert werden, ohne diesen auf die hier gezeigten spezifischen Ausführungsformen anwenden zu wollen.
Fig. 1 zeigt eine erste erfindungsgemäße Ausführungsform der Milchaufschäumvorrichtung.
Fig. 2 zeigt eine zweite erfindungsgemäße Ausführungsform der Milchaufschäumvorrichtung.
Fig. 3 zeigt eine dritte erfindungsgemäße Ausführungsform der Milchaufschäumvorrichtung.
Fig. 4 zeigt verschiedene Varianten für die erfindungsgemäßen Scherelemente.
Fig. 5 zeigt eine vierte erfindungsgemäße Ausführungsform der Milchaufschäumvorrichtung.
Fig. 6 zeigt eine Schnittdarstellung der vierten erfindungsgemäßen Ausführungsform.

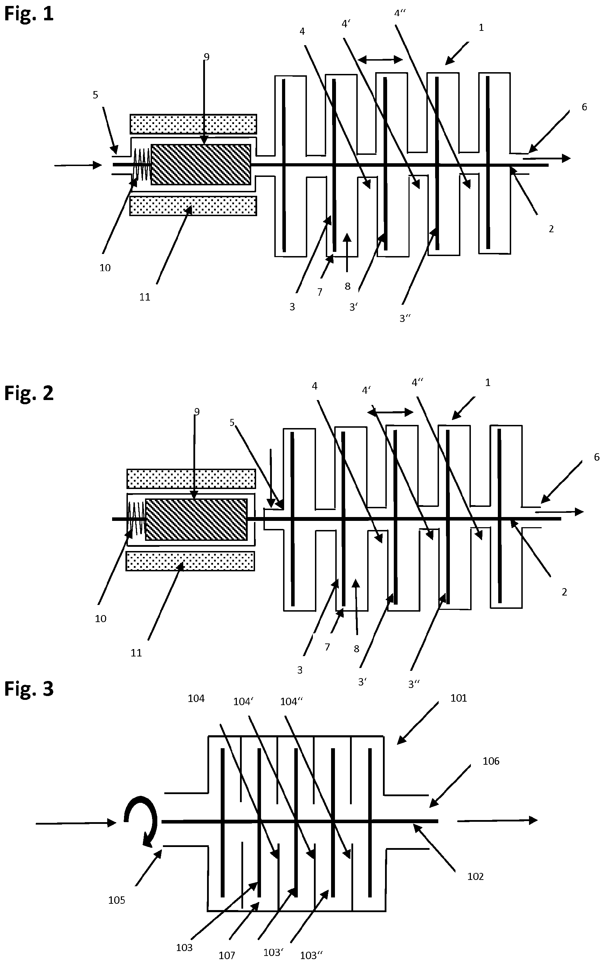

In Fig. 1 ist eine erste erfindungsgemäße Ausführungsform dargestellt, die eine Mischkammer 1 aufweist, in der im Zentrum eine Welle 2 mit Scherelementen 3, 3' und 3" angeordnet ist. Weiterhin sind an der Mischkammerwand ebenfalls Scherelemente 4, 4'und 4" angeordnet. Die Welle 2 erstreckt sich in der Mischkammer 1 vom Einlass 5 zum Auslass 6 für die Milch, Luft bzw. Dampf-Luft-Gemisch. Die Scherelemente 3, 3' und 3" (in Form von Scheiben) sind nun so zur Mischkammerwand beabstandet, dass zwischen der Mischkammerwand und dem Scherelement eine Öffnung bzw. Spalt 7 vorliegt, der im Vergleich zum Strömungsbereich 8 zwischen den benachbarten Scherelementen 3 und 4 deutlich kleiner dimensioniert ist und damit eine Verengung darstellt. In Fig. 1 ist dies nur für ein Scherelement bezeichnet, analog liegen auch bei den anderen Scherelementen entsprechende Verengungen vor. Der durch diese Verengungen bewirkte Strömungswiderstand führt zu einer Druckerhöhung unmittelbar vor der Verengung. Nach Passieren der Verengung 7 kommt es dann zu einer plötzlichen Entspannung der durchströmenden Milch, was dazu führt, dass starke Scherkräfte auf die Milch einwirken, was wiederum bewirkt, dass das Aufschäumen der Milch erleichtert wird.

Verstärkt wird diese Wirkung in der Figur 1 noch dadurch, dass die Welle 2 mittels eines Antriebs in Richtung des Einlasses 4 und des Auslasses 5 bewegbar ist. Der Antrieb besteht hierbei aus einem Anker 9, sowie einer Feder 10. Durch die Spule 11, die mit Wechselspannung beaufschlagt wird, wird ein oszillierendes Magnetfeld erzeugt. Hieraus resultiert eine vibrierende Bewegung der Welle 2 mit zugehörigen Scherelementen 3, 3' und 3" in Axialrichtung.

In Fig. 2 ist eine weitere erfindungsgemäße Ausführungsform dargestellt, die in wesentlichen Punkten der Ausführungsform in Fig. 1 entspricht. Insofern wird auf die diesbezügliche Beschreibung zu Fig. 1 verwiesen. Der Unterschied zu Fig. 1 besteht hierin, dass die Antriebsvorrichtung mit Anker 9 und Feder 10 nicht in die Mischkammer 1 integriert ist, sondern die Mischkammer 1 und der Antrieb voneinander separiert wurden. Der Einlass 5 für Milch, Luft oder Luft-Dampf-Gemisch ist hier zwischen Mischkammer 1 und Antrieb angeordnet.

In Fig. 3 ist eine weitere erfindungsgemäße Milchaufschäumvorrichtung dargestellt, die aus einer Mischkammer 101 besteht, in der zentral eine Welle 102 angeordnet ist. Die Welle 102 weist mehrere Scherelemente 103, 103' und 103" auf. Die Welle 102 wird hier durch einen nicht dargestellten Rotationsantrieb rotiert. Die Welle liegt dabei in der Rotationsachse und erstreckt sich vom Einlass 105 zum Auslass 106 für Milch, Luft oder Luft-Dampf-Gemisch. Auch hier sind die Scherelemente zur Mischkammerwand so beabstandet, dass die Öffnung 107 eine deutlich kleinere Dimension, als die Strömungsbereiche 108 zwischen benachbarten Scherelementen, d.h. jeweils einem Scherelement 103, das auf der Welle 102 angeordnet ist und einem Scherelement 104, das an der Wand der Mischkammer 1 angeordnet ist.

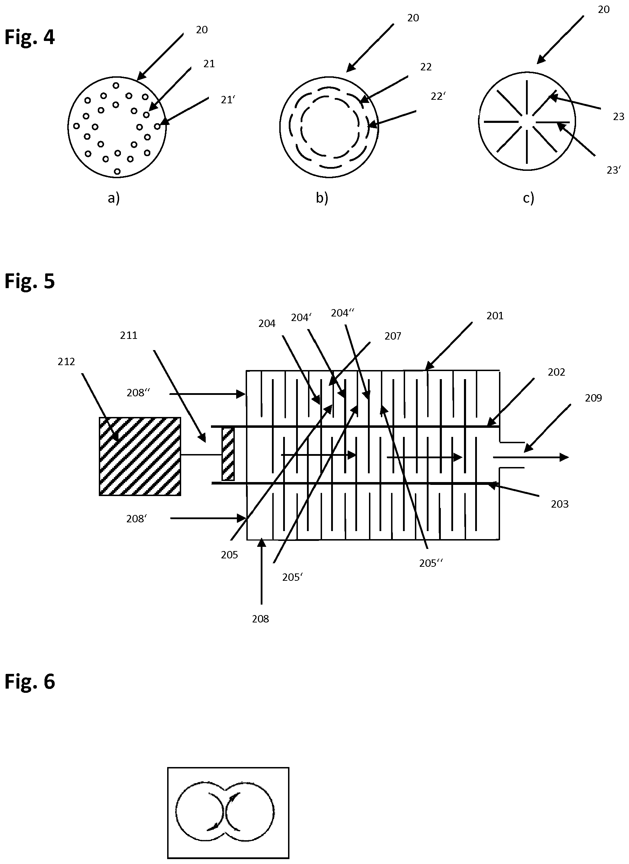

In Fig. 4 sind verschiedene Beispiele für erfindungsgemäße Scherelemente 3 dargestellt. In allen drei Fällen handelt es sich um eine Scheibe, die verschiedene Formen von Durchbrechungen aufweisen kann. In Fig. 4a handelt es sich um eine gelochte Scheibe 20 mit Löchern 21, 21'etc.. Eine weitere Variante gemäß Fig. 4b sieht vor, dass die Scheibe 20 im Wesentlichen radial angeordnete Schlitze 22, 22'etc. aufweist. Gemäß einer dritten Variante kann die Scheibe 20 sternförmig angeordnete Schlitze 23, 23' etc. aufweisen (siehe Fig. 4c).

In Fig. 5 ist eine weitere Ausführungsform der erfindungsgemäßen Milchaufschäumvorrichtung dargestellt, die eine Mischkammer 201 mit zwei zueinander versetzt angeordneten Wellen 202 und 203 darstellt. Auf der Welle 202 ist eine Vielzahl von Scherelementen 204, 204'und 204"angeordnet. In der Figur ist hier nur ein Teil der ansonsten identischen Scherelemente bezeichnet. Analog zur Welle 202 ist die zweite Welle 203 mit Scherlementen versehen, die hier nicht bezeichnet wurden. Benachbart zu den Scherelementen 204, 204' und 204" der ersten Welle 202 sind benachbart an der Mischkammerwand weitere Scherelemente 205, 205' und 205" angeordnet. Die Mischkammer kann einen seitlich an der Mischkammer angeordneten Einlass 208 oder auch stirnseitig angeordnete Einlässe 208'und/oder 208" aufweisen. Der Auslass 209 ist am anderen Ende der Mischkammer 201 angeordnet. Die beiden Wellen 202 und 203 sind mit einem Antriebsrad 210 verbunden, der über eine Welle 211 mit einem Motor 212 verbunden ist. Durch diesen Antrieb erfolgt eine gegenläufige Rotation der beiden Wellen 21 und 22. In Fig. 6 ist eine Schnittdarstellung der Milchaufschäumvorrichtung gemäß Fig. 5 dargestellt, aus der die gegenläufige Bewegung der beiden Wellen zu erkennen ist.

## Patentansprüche

1. Milchaufschäumvorrichtung mit einer Mischkammer (1, 101, 201) mit
mindestens einem Einlass (5, 105, 208, 208', 208") für Milch und Luft oder ein Luft-Dampf-Gemisch und
mindestens einem Auslass (6, 106, 209) für Milchschaum sowie
einer in der Mischkammer (1, 101, 201) angeordneten radial oder axial bewegbaren Welle (2, 102, 202, 203), wobei die Mischkammer zwischen Einlass (5, 105, 208, 208', 208") und Auslass (6, 106, 209) mehrere alternierend angeordnete Scherelemente (3, 3', 3", 4, 4', 4", 103, 103', 103", 104, 104', 104", 204, 204'204", 205, 205', 205") aufweist, die eine mäanderförmige Strömung der Milch vom Einlass (5, 105, 208, 208', 208") zum Auslass (6, 106, 209) bewirken,
wobei die auf der mindestens einen Welle (2, 102, 202, 203) angeordneten Scherelemente (3, 3', 3", 103, 103', 103", 204, 204', 204") zur Kammerwand beabstandet sind unter Ausbildung von wandseitigen Öffnungen (7, 107, 206), die im Vergleich zum übrigen Strömungsbereich so dimensioniert sind, dass die Öffnungen (7, 107, 206) einen Strömungswiderstand für die Milch darstellen und
wobei die Mischkammer (1, 101, 201) im Strömungsbereich der Milch Verengungen aufweist, die einen Strömungswiderstand für durchströmende Milch darstellen, so dass bei Durchströmen der Milch durch die Verengungen Scherkräfte auf die Milch einwirken, die zur mechanischen Lyse der in der Milch enthaltenen Proteine führen,
wobei der mindestens eine Einlass (5, 105, 208, 208', 208")
i) im Kammerzentrum im Bereich der Welle (2) angeordnet ist und die Scherelemente (3, 3', 3", 4, 4', 4", 103, 103', 103", 104, 104', 104", 204, 204', 204", 205, 205', 205") derart angeordnet sind, dass die durch den Einlass (5, 105, 208, 208', 208") eintretende Milch alternierend vom Kammerzentrum zur Kammerwand und von der Kammerwand zum Kammerzentrum gefördert wird, wobei die Scherelemente (3, 3', 3", 4, 4', 4", 103, 103', 103", 104, 104', 104", 204, 204', 204", 205, 205', 205") ausgewählt sind aus der Gruppe bestehend aus Scheiben, Lamellen und Kombinationen hiervon; oder
ii) im Bereich der Kammerwand angeordnet ist und die Scherelemente (3, 3', 3", 4, 4', 4", 103, 103', 103", 104, 104', 104", 204, 204', 204", 205, 205', 205") derart angeordnet sind, dass die durch den Einlass (5, 105, 208, 208', 208") eintretende Milch alternierend von der Kammerwand zum Kammerzentrum und vom Kammerzentrum zur Kammerwand gefördert wird, wobei die Scherelemente (3, 3', 3", 4, 4', 4", 103, 103', 103", 104, 104', 104", 204, 204', 204", 205, 205', 205") ausgewählt sind aus der Gruppe bestehend aus Scheiben, Lamellen und Kombinationen hiervon.

2. Milchaufschäumvorrichtung nach Anspruch 1, **dadurch gekennzeichnet, dass** die Scheiben (20) Durchbrechungen aufweisen, insbesondere in Form von Löchern (21, 21'), Schlitzen (22, 22', 23, 23') oder Kombinationen hiervon, die im Verhältnis zum übrigen Strömungsbereich der Milch so dimensioniert sind, dass die Durchbrechungen einen Strömungswiderstand für durchströmende Milch und Verengungen darstellen, wobei die Durchbrechungen benachbarter Scheiben (20) vorzugsweise zueinander versetzt angeordnet sind, dass durchströmende Milch umgelenkt wird.

3. Milchaufschäumvorrichtung nach einem der vorhergehenden Ansprüche, **dadurch gekennzeichnet, dass** die Scherelemente (4, 4', 4", 104, 104', 104", 205, 205', 205") in der Mischkammer (1, 101, 201) alternierend und zueinander beabstandet an der Mischkammerwand und der Welle (2, 102, 202, 203) angeordnet sind.

4. Milchaufschäumvorrichtung nach einem der vorhergehenden Ansprüche, **dadurch gekennzeichnet**, die Welle (102) mittels eines Rotorantriebs rotierbar ist, bevorzugt mit einer Drehzahl zwischen 500 1/min und 7000 1/min, besonders bevorzugt zwischen 2000 1/min und 4000 1/min.

5. Milchaufschäumvorrichtung nach einem der vorhergehenden Ansprüche, **dadurch gekennzeichnet, dass** die Welle (2, 202, 203) axial in Richtung des Einlasses (5, 105, 208, 208', 208") und in Richtung des Auslasses (6, 106, 209) mittels eines Axialantriebs bewegbar ist.

6. Milchaufschäumvorrichtung nach einem der vorhergehenden Ansprüche, **dadurch gekennzeichnet, dass** die Mischkammer (1, 101, 201) zylindrisch oder konisch, insbesondere mit einem in Richtung vom Einlass (5, 105, 208, 208', 208") zum Auslass (6, 106, 209) abnehmendem Durchmesser, aufgebaut ist.

7. Milchaufschäumvorrichtung nach einem der vorhergehenden Ansprüche, **dadurch gekennzeichnet, dass** die Milchaufschäumvorrichtung mit einer Steuereinheit verbunden ist, mit der mindestens eine der folgenden Kenngrößen der Milchaufschäumvorrichtung einstellbar ist/sind:
• die der Mischkammer (1, 101, 201) zugeleitete Milchmenge,
• die der Mischklammer (1, 101, 201) pro Zeiteinheit zugeleitete Luftmenge oder Luft-Dampf-Gemisch-Menge,
• das Mischungsverhältnis von Luft und Dampf eines der dynamischen Mischeinheit zugeleiteten Luft-Dampf-Gemisches,
• die Fördergeschwindigkeit für Milch, Luft und/oder Dampf
• die mechanische Energiezufuhr für die Welle (2, 102, 202, 203), insbesondere Drehzahl Hub und/oder Hubfrequenz.

8. Getränkebereiter, insbesondere zum Zubereiten von Heißgetränken, bevorzugt elektrisch betriebene Kaffeemaschine, mit einer Milchaufschäumvorrichtung nach einem der vorhergehenden Ansprüche.

9. Verfahren zur Aufschäumung von Milch, bei dem eine Milchaufschäumvorrichtung gemäß einem der Ansprüche 1 bis 7 eingesetzt wird und wobei in einer Mischkammer (1, 101, 201) mit mindestens einem Einlass (5, 105, 208, 208', 208") und mindestens einem Auslass (6, 106, 209) für Milch sowie einer in der Mischkammer (1, 101, 201) angeordneten radial oder axial bewegbaren Welle (2, 102, 202, 203), bei dem die Milch an Scherelementen (3, 3', 3", 4, 4', 4", 103, 103', 103", 104, 104', 104", 204, 204', 204", 205, 205', 205") entlang mäanderförmig durch die Mischkammer (1, 101, 201) vom Einlass (5, 105, 208, 208', 208") zum Auslass (6, 106, 209) strömt, und durch mehrere Verengungen im Strömungsbereich der Milch ein Strömungswiderstand erzeugt wird, so dass bei Durchströmen der Milch durch die Verengungen Scherkräfte auf die Milch einwirken, die zur mechanischen Lyse der in der Milch enthaltenen Proteine führen, wobei als Scherelemente (3, 3', 3", 4, 4', 4", 103, 103', 103", 104, 104', 104", 204, 204'204", 205, 205', 205") Scheiben, Lamellen oder Kombinationen hiervon eingesetzt werden.

10. Verfahren nach Anspruch 9, **dadurch gekennzeichnet, dass** die Scheiben (20) Durchbrechungen aufweisen, insbesondere in Form von Löchern (21, 21'), Schlitzen (22, 22', 23, 23') oder Kombinationen hiervon, die im Verhältnis zum übrigen Strömungsbereich der Milch so dimensioniert sind, dass die Durchbrechungen einen Strömungswiderstand für durchströmende Milch und Verengungen darstellen.

## Claims

1. Milk-frothing device having a mixing chamber (1, 101, 201) having
at least one inlet (5, 105, 208, 208', 208") for milk and air or an air-steam mixture and
at least one outlet (6, 106, 209) for milk froth and also
a shaft (2, 102, 202), which is disposed in the mixing chamber (1, 101, 201) and is radially or axially moveable, wherein the mixing chamber has, between inlet (5, 105, 208, 208', 208") and outlet (6, 106, 209), a plurality of alternately disposed shear elements (3, 3', 3", 4, 4', 4", 103, 103', 103", 104, 104', 104", 204, 204', 204", 205, 205', 205") which effect a meandering flow of the milk from the inlet (5, 105, 208, 208', 208") to the outlet (6, 106, 209), and
wherein the shear elements (3, 3', 3", 103, 103', 103", 204, 204', 204") disposed on the at least one shaft (2, 102, 202, 203) are at a spacing relative to the chamber wall with formation of wall-side openings (7, 107, 206) which, in comparison with the remaining flow region, are dimensioned such that the openings (7, 107, 206) represent a flow resistance for the milk,
wherein the mixing chamber (1, 101, 201) has, in the flow region of the milk, restrictions which represent a flow resistance for through-flowing milk so that, when the milk flows through the restrictions, shear forces act on the milk which lead to mechanical lysis of the proteins contained in the milk,
wherein the at least one inlet (5, 105, 208, 208', 208")
i) is disposed in the chamber centre in the region of the shaft (2) and the shear elements (3, 3', 3", 4, 4', 4", 103, 103', 103", 104, 104', 104", 204, 204', 204", 205, 205', 205") are disposed such that the milk entering through the inlet (5, 105, 208, 208', 208") is conveyed alternately from the chamber centre to the chamber wall and from the chamber wall to the chamber centre, wherein the shear elements (3, 3', 3", 4, 4', 4", 103, 103', 103", 104, 104', 104", 204, 204', 204", 205, 205', 205") are selected from the group consisting of discs, lamellae and combinations hereof; or
ii) is disposed in the region of the chamber wall and the shear elements (3, 3', 3", 4, 4', 4", 103, 103', 103", 104, 104', 104", 204, 204', 204", 205, 205', 205") are disposed such that the milk entering through the inlet (5, 105, 208, 208', 208") is conveyed alternately from the chamber wall to the chamber centre and from the chamber centre to the chamber wall, wherein the shear elements (3, 3', 3", 4, 4', 4", 103, 103', 103", 104, 104', 104", 204, 204', 204", 205, 205', 205") are selected from the group consisting of discs, lamellae and combinations hereof.

2. Milk-frothing device according to claim 1, **characterised in that** the discs (20) have through-openings, in particular in the form of holes (21, 21'), slots (22, 22', 23, 23') or combinations hereof which, relative to the remaining flow region of the milk, are dimensioned such that the through-openings represent a flow resistance for through-flowing milk and restrictions, wherein the through-openings of adjacent discs (20) are preferably disposed offset relative to each other such that through-flowing milk is deflected.

3. Milk-frothing device according to one of the preceding claims, **characterised in that** the shear elements (4, 4', 4", 104, 104', 104", 205, 205', 205") in the mixing chamber (1, 101, 201) are disposed alternately and at a spacing relative to each other on the mixing chamber wall and the shaft (2, 102, 202, 203).

4. Milk-frothing device according to one of the preceding claims, **characterised in that** the shaft (102) is rotatable by means of a rotor drive, preferably at a speed of rotation between 500 1/min and 7,000 1/min, particularly preferably between 2,000 1/min and 4,000 1/min.

5. Milk-frothing device according to one of the preceding claims, **characterised in that** the shaft (2, 202, 203) is moveable axially in the direction of the inlet (5, 105, 208, 208', 208") and in the direction of the outlet (6, 106, 209) by means of an axial drive.

6. Milk-frothing device according to one of the preceding claims, characterised that the mixing chamber (1, 101, 201) is constructed cylindrically or conically, in particular with a diameter which reduces in the direction from the inlet (5, 105, 208, 208', 208") to the outlet (6, 106, 209).

7. Milk-frothing device according to one of the preceding claims, **characterised in that** the milk-frothing device is connected to a control unit with which at least one of the following parameters of the milk-frothing device is/are adjustable:
• the milk quantity supplied to the mixing chamber (1, 101, 201),
• the air quantity or air-steam mixture quantity supplied to the mixing chamber (1, 101, 201) per unit of time,
• the mixing ratio of air and steam of an air-steam mixture supplied to the dynamic mixing unit,
• the conveying speed for milk, air and/or steam,
• the mechanical energy supply for the shaft (2, 102, 202, 203), in particular speed of rotation of stroke and/or stroke frequency.

8. Beverage maker, in particular for preparing hot beverages, preferably electrically operated coffee machine, having a milk-frothing device according to one of the preceding claims.

9. Method for frothing-up of milk, in which a milk-frothing device according to one of the claims 1 to 7 is used, and wherein in a mixing chamber (1, 101, 201) having at least one inlet (5, 105, 208, 208', 208") and at least one outlet (6, 106, 209) for milk and also a shaft (2, 102, 202, 203) which is disposed in the mixing chamber (1, 101 201) and is radially or axially moveable, in which the milk flows along shear elements (3, 3', 3", 4, 4', 4", 103, 103', 103", 104, 104', 104", 204, 204', 204", 205, 205', 205") meandering through the mixing chamber (1, 101, 201) from the inlet (5, 105, 208, 208', 208") to the outlet (6, 106, 209), and a flow resistance is produced by a plurality of restrictions in the flow region of the milk so that, when the milk flows through the restrictions, shear forces act on the milk which lead to mechanical lysis of the proteins contained in the milk, wherein there are used as shear elements (3, 3', 3", 4, 4', 4", 103, 103', 103", 104, 104', 104", 204, 204', 204", 205, 205', 205") discs, lamellae or combinations hereof.

10. Method according to claim 9, **characterised in that** the discs (20) have through-openings, in particular in the form of holes (21, 21'), slots (22, 22', 23, 23') or combinations hereof which, relative to the remaining flow region of the milk, are dimensioned such that the through-openings represent a flow resistance for through-flowing milk and restrictions.

## Revendications

1. Dispositif de moussage de lait avec une chambre de mélange (1, 101, 201),
avec au moins une entrée (5, 105, 208, 208', 208") pour le lait et l'air ou un mélange air-vapeur et
au moins une sortie (6, 106, 209) pour de la mousse de lait
ainsi qu'un arbre (2, 102, 202, 203) mobile radialement ou axialement, disposé dans la chambre de mélange (1, 101, 201), dans lequel la chambre de mélange comprend, entre l'entrée (5, 105, 208, 208', 208") et la sortie (6, 106, 209), plusieurs éléments de cisaillement (3, 3', 3", 4, 4', 4", 103, 103', 103", 104, 104', 104", 204, 204', 204", 205, 205', 205"), qui produisent un écoulement en méandres du lait de l'entrée (5, 105, 208, 208', 208") vers la sortie (6, 106, 209),
dans lequel les éléments de cisaillement (3, 3', 3", 103, 103', 103", 204, 204', 204") disposés sur l'au moins un arbre (2, 102, 202, 203) sont distants de la paroi de la chambre en formant des ouvertures côté paroi (7, 107, 206) qui sont dimensionnées par rapport au reste de la zone d'écoulement de sorte que les ouvertures (7, 107, 206) représentent une résistance à l'écoulement pour le lait et
dans lequel la chambre de mélange (1, 101, 201) comprend, dans la zone d'écoulement du lait, des rétrécissements qui représentent une résistance à l'écoulement pour le lait qui la traverse, de sorte que, lorsque le lait traverse les rétrécissements, des forces de cisaillement sont exercées sur le lait et produisent une lyse mécanique des protéines contenues dans le lait,
dans lequel l'au moins une entrée (5, 105, 208, 208', 208")
i) est disposée dans centre de la chambre au niveau de l'arbre (2) et les éléments de cisaillement (3, 3', 3", 4, 4', 4", 103, 103', 103", 104, 104', 104", 204, 204', 204", 205, 205', 205") sont disposés de sorte que le lait entrant par l'entrée (5, 105, 208, 208', 208") est transporté alternativement du centre de la chambre vers la paroi de la chambre et de la paroi de la chambre vers le centre de la chambre, dans lequel les éléments de cisaillement (3, 3', 3", 4, 4', 4", 103, 103', 103", 104, 104', 104", 204, 204', 204", 205, 205', 205") sont sélectionnés dans le groupe constitué de disques, de lamelles ou de combinaisons de ceux-ci ; ou
ii) est disposée au niveau de la paroi de la chambre et les éléments de cisaillement (3, 3', 3", 4, 4', 4", 103, 103', 103", 104, 104', 104", 204, 204', 204", 205, 205', 205") sont disposés de sorte que le lait entrant par l'entrée (5, 105, 208, 208', 208") est transporté alternativement de la paroi de la chambre vers le centre de la chambre et du centre de la chambre vers la paroi de la chambre, dans lequel les éléments de cisaillement (3, 3', 3", 4, 4', 4", 103, 103', 103", 104, 104', 104", 204, 204', 204", 205, 205', 205") sont sélectionnés dans le groupe constitué de disques, de lamelles ou de combinaisons de ceux-ci.

2. Dispositif de moussage de lait selon la revendication 1, **caractérisé en ce que** les disques (20) présentent des découpes, plus particulièrement sous la forme de trous (21, 21'), de fentes (22, 22', 23, 23') ou de combinaisons de ceux-ci, qui sont dimensionnés par rapport au reste de la zone d'écoulement du lait de sorte que les découpes représentent une résistance à l'écoulement pour le lait qui les traverse et des rétrécissements, dans lequel les découpes de disques (20) adjacents sont disposées de préférence de manière décalée entre elles, de sorte que le lait qui les traverse est dévié.

3. Dispositif de moussage de lait selon l'une des revendications précédentes, **caractérisé en ce que** les éléments de cisaillement (4, 4', 4", 104, 104', 104", 205, 205', 205") sont disposés de manière alternée dans la chambre de mélange (1, 101, 201) et de manière distante entre elles au niveau de la paroi de la chambre de mélange et de l'arbre (2, 102, 202, 203).

4. Dispositif de moussage de lait selon l'une des revendications précédentes, **caractérisé en ce que** l'arbre (102) peut être mis en rotation au moyen d'un dispositif d'entraînement à rotor, de préférence avec une vitesse de rotation entre 500 1/min et 7000 1/min, plus particulièrement de préférence entre 2000 1/min et 4000 1/min.

5. Dispositif de moussage de lait selon l'une des revendications précédentes, **caractérisé en ce que** l'arbre (2, 202, 203) est mobile axialement en direction de l'entrée (5, 105, 208, 208', 208") et en direction de la sortie (6, 106, 209) au moyen d'un dispositif d'entraînement axial.

6. Dispositif de moussage de lait selon l'une des revendications précédentes, **caractérisé en ce que** la chambre de mélange (1, 101, 201) présente une forme cylindrique ou conique, plus particulièrement avec un diamètre diminuant de l'entrée (5, 105, 208, 208', 208") vers la sortie (6, 106, 209).

7. Dispositif de moussage de lait selon l'une des revendications précédentes, **caractérisé en ce que** le dispositif de moussage de lait est relié avec une unité de commande avec laquelle au moins une des grandeurs caractéristiques suivantes du dispositif de moussage de lait peut être ajustée :
• la quantité de lait introduite dans la chambre de mélange (1, 101, 201),
• la quantité d'air ou la quantité de mélange air-vapeur introduite par unité de temps dans la chambre de mélange (1, 101, 201),
• le rapport de mélange entre l'air et la vapeur d'un mélange air-vapeur introduit dans l'unité de mélange dynamique,
• la vitesse de transport pour le lait, l'air et/ou la vapeur,
• l'apport d'énergie mécanique pour l'arbre (2, 102, 202, 203), plus particulièrement la vitesse de rotation, le déplacement et/ou la fréquence du déplacement.

8. Préparateur de boissons, plus particulièrement pour la préparation de boissons chaudes, de préférence machine à café électrique, avec un dispositif de moussage de lait selon l'une des revendications précédentes.

9. Procédé de moussage de lait dans lequel un dispositif de moussage de lait selon l'une des revendications 1 à 7 est utilisé et dans lequel, dans une chambre de mélange (1, 101, 201) avec au moins une entrée (5, 105, 208, 208', 208") et au moins une sortie (6, 106, 209) pour le lait ainsi qu'un arbre (2, 102, 202, 203) mobile radialement ou axialement, disposé dans la chambre de mélange (1, 101, 201), dans lequel le lait s'écoule le long d'éléments de cisaillement (3, 3', 3", 4, 4', 4", 103, 103', 103", 104, 104', 104", 204, 204', 204", 205, 205', 205"), en formant des méandres, à travers la chambre de mélange (1, 101, 201) de l'entrée (5, 105, 208, 208', 208") vers la sortie (6, 106, 209), et, grâce à plusieurs rétrécissements dans la zone d'écoulement du lait, une résistance à l'écoulement est générée, de sorte que, lorsque le lait travers les rétrécissements, des forces de cisaillement sont exercées sur le lait, qui provoquent une lyse mécanique des protéines contenues dans le lait, dans lequel les éléments de cisaillement (3, 3', 3", 4, 4', 4", 103, 103', 103", 104, 104', 104", 204, 204', 204", 205, 205', 205") peuvent être des disques, des lamelles ou des combinaisons de ceux-ci.

10. Procédé selon la revendication 9, **caractérisé en ce que** les disques (20) présentent des découpes, plus particulièrement sous la forme de trous (21, 21'), de fentes (22, 22', 23, 23') ou de combinaisons de ceux-ci, qui sont dimensionnés par rapport au reste de la zone d'écoulement du lait de sorte que les découpes représentent une résistance à l'écoulement pour le lait qui les traverse et de rétrécissements.
